# EUROPEAN PATENT SPECIFICATION

(11) **EP 0 639 436 B1**
(45) Date of publication and mention of the grant of the patent: **17.07.2002**
(21) Application number: 94905233.6
(22) Date of filing: 31.01.1994
(51) Int. Cl.: B28B 11/00, F27D 5/00

(54) **PLANKING FOR FIRING AND METHOD OF FIRING CERAMIC PRODUCTS BY USING THE SAME**
BRENNGUTTRAEGER UND BRENNVERFAHREN KERAMISCHER GEGENSTAENDE UNTER VERWENDUNG DIESES BRENNGUTTRAEGERS
PLANCHE DESTINEE A LA CUISSON, ET PROCEDE DE CUISSON DE PRODUITS CERAMIQUES AU MOYEN DE CETTE PLANCHE

(30) Priority: 02.02.1993 JP 1545393
(43) Date of publication of application: 22.02.1995
(73) Proprietor: NGK INSULATORS, LTD., Nagoya-shi, Aichi 467 (JP)
(72) Inventor: IDEGUCHI, Yoshiaki, Nagoya-shi Aichi 467 (JP); TSUNEKAWA, Kyosuke, Nagoya-shi Aichi 467 (JP); KATO, Norio, Seto-shi Aichi 489 (JP)
(74) Representative: Leson, Thomas Johannes Alois, Dipl.-Ing.
(86) International application number: JP9400129
(87) International publication number: WO9417972

(56) References cited:
- FR-A- 2 347 321
- FR-A- 2 612 511
- JP-A- 3 065 568
- JP-A- 5 051 262
- JP-A- 5 085 834
- JP-A- 5 139 849
- US-A- 3 954 672
- US-A- 4 598 054

## Description

The present invention relates to underlying boards particularly suitable for firing ceramics and a method for firing ceramic moldings by using such underlying boards.

### Background Art:

It is heretofore a common practice that when, for example, green ceramic honeycomb structural bodies are to be fired, the structural bodies are fired in a tunnel kiln or a periodic kiln, while being placed on a shelf plate. In order to prevent cracking of the structural body and bonding between the structural body and the shelf plate, the green ceramic honeycomb structural bodies are fired in the state that the structural bodies are placed on the shelf plate through underlying boards called setters without being directly placed on the shelf plate.

Japanese patent publication No. 1-54,636 discloses, as an example of the underlying board, a setter made of a ceramic plate with a honeycomb structure and having a burred portion at an upper edge. For example, when a honeycomb structural body composed mainly of cordierite is to be fired, it is a common practice to employ an underlying board made of the same material (100% cordierite) as that of the honeycomb structural body so as to make the shrinkage factor equal between the underlying board and the honeycomb structural body to be fired.

FR-A-2 347 321 discloses a fire resistant ceramic honeycomb material comprising mainly cordierite and not more than 20 wt.-% of spinel, mullite and/or corundum.

However, in the case of the above-mentioned firing underlying boards, there are problems that as the number of times of passing the board through the tunnel kiln increases, the underlying board is warped with heat, and the surface of the structural body becomes coarse due to melting-out of a silica component so that the under end face of the honeycomb structural body is deformed, ribs of the honeycomb structural body are twisted and/or the structural body is cracked. Particularly, if the underlying board made of 100% cordierite is used in a tunnel kiln, the above troubles such as warping and melting-out of the silica component are conspicuous, because such an underlying board has poor resistance against direct flame from a burner of the tunnel kiln. Owing to this, the conventional underlying boards have the problem that the number of times of passing through the tunnel kiln may be as short as 15-20.

It is an object of the present invention is to solve the above-mentioned problems, and is to provide a firing underlying board which has a long service life free from thermal deformation and which does not cause twisting of ribs, deformation of end faces, cracking or color change in a honeycomb structural body on firing with use of the underlying board. It is another object of the invention to provide a method for firing ceramic moldings by using such a underlying plate.

### Disclosure of the Invention:

The firing underlying board according to the present invention is characterized in that a main component is composed of 55-85 wt% cordierite and 15-45 wt% mullite, wherein the firing underlying board contains 0.3 to 1.0 % by weight of Fe₂O₃ and/or 0.2 to 0.8 % by weight of TiO₂ in a chemical composition. It is preferable that a roughness Ra of that surface of the underlying board at which an object to be fired is to be placed is not more than 10 µm.

The method for firing the ceramic molding by using the underlying board according to the present invention is characterized in that a green ceramic honeycomb structural body is fired in the state that the honeycomb structural body is placed on an underlying board for firing, in which a main component of the board is composed of 55-85 wt% cordierite and 15-45 wt% mullite.

In the above construction, the present inventors found out that when, for example, a green ceramic honeycomb structural body is fired with use of the underlying board in which the main component is composed of 55-85 wt% cordierite and 15-45 wt% mullite, the underlying board exhibits a long service life without being thermally deformed. Accordingly, twisting of the ribs, deformation of the end face and cracking in the honeycomb structural body due to thermal deformation of the underlying board can be prevented.

The reason why the amount of mullite is limited to 15-45 wt% is that if it is less than 15 wt%, the underlying board begins to be melted at not more than 1500°C, so that such an underlying board has unfavorably poor refractoriness in the case of firing with direct flame, whereas if the amount is more than 45 wt%, the underface of the honeycomb structure body unfavorably becomes whitish.

The reason why the surface roughness is preferably not more than 10 µm is that if the surface roughness is more than 10 µm, the ribs of the honeycomb structural body may be twisted at the lower end face due to shrinkage friction resistance on firing.

Further, the reason why the content of Fe₂O₃ is 0.3 to 1.0 wt% in the chemical composition is that if the content is more than 1.0 wt%, the color of the underlying board may be changed to reddish brown, whereas if it is less than 0.3 wt%, an Fe component in the honeycomb structural body may diffuse into the underlying board having a low content of Fe, the content of Fe in the honeycomb structural body decreases to make the honeycomb structural body whitish.

Furthermore, the reason why the content of TiO₂ is 0.2 to 0.8 wt% in the chemical composition is that if the content is more than 0.8 wt%, the color of the lower end face of the honeycomb structural body may be changed to reddish brown, whereas if the content is less than 0.2 wt%, the TiO₂ component contained in the honeycomb structural body may diffuse into the underlying board having a low content of Fe so that the content of Fe in the underlying board decreases to make the honeycomb structural body whitish.

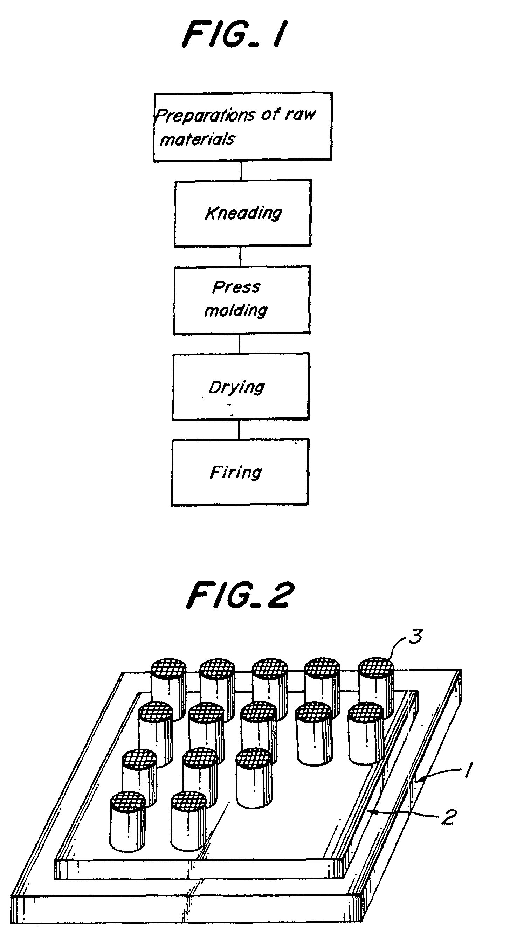

Fig. 1 shows a flow chart illustrating an example of the process for producing the firing underlying boards according to the present invention. Bodies having raw materials each having a main component composed of 55-85 wt% of cordierite and 15-45 wt% of mullite after firing are formulated and mixed. Then, 3 wt% of water is added to the resulting mixture, which is kneaded with a mixer for 15 minutes to obtain a body. Next, the kneaded body is fed into a hydraulic press machine where the kneaded body is press molded under pressure of 400-800 kg/cm². Thereafter, the resulting molding is dried in a temperature range of 90-100°C for 4 hours, and fired in a temperature range of 1360-1420°C for one hour. Thereby, an underlying board according to the present invention is obtained.

The chemical composition of the underlying board is preferably 35-50 wt% of SiO₂, 40-55 wt% of Al₂O₃, 5-15 wt% of MgO, 0.3-1.0 wt% of Fe₂O₃, and 0.2-0.8 wt% of TiO₂. If the content of Fe₂O₃ exceeds 1.0 wt%, the under end face of the honeycomb structural body may become reddish brown. If the content of TiO₂ exceeds 0.8 wt%, similar color change may occur. Thus, it is preferable that the content of Fe₂O₃ is not more than 1.0 wt%, and that the content of TiO₂ is not more than 0.8 wt%.

When green ceramic honeycomb structural bodies are to be fired by using the underlying board according to the present invention, as shown in Fig. 2, the underlying board 2 of the present invention is placed on a shelf plate 1, and a plurality of green ceramic honeycomb structural bodies 3 are placed on this underlying board 2 such that through holes of the honeycomb structural bodies may be directed perpendicularly to the underlying board 2. The green ceramic honeycomb structural bodies 3 are fired in this state by using firing kiln such as a tunnel kiln or a periodical kiln according to a given firing condition.

### BRIEF DESCRIPTION OF THE DRAWINGS:

Fig. 1 is a flow chart illustrating steps of an example of a process for producing underlying boards according to the present invention;
Fig. 2 is a view illustrating the state that green ceramic honeycomb structural bodies are fired with use of a underlying board according to the present invention; and
Fig. 3 is a graph showing the relationship between the temperature at which the underlying board began to be melted and the weight ratio of mullite in an Experiment.

### Best Mode for Working the Invention:

### Experiment 1

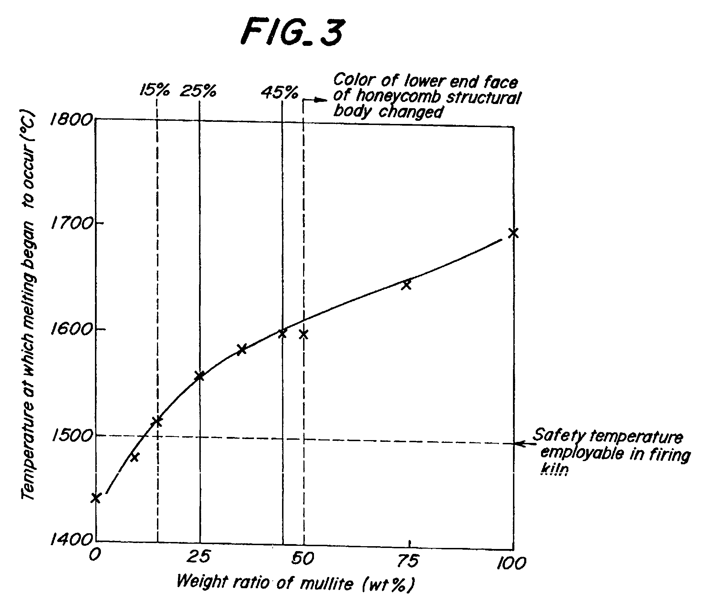

Underlying boards were prepared for firing, according to the above-mentioned producing process with their compositions being varied in the following Table 1. Molding pressure and bulk density of the underlying board were measured during the production thereof. Further, green ceramic honeycomb structural bodies were fired in a firing kiln with use of the thus prepared firing underlying boards. During or after the firing, color of contact faces of the honeycomb structural bodies with the underlying board, and the melted state of the underlying board with direct flame were observed by eyes. Further, the temperature at which the underlying board began to be melted was examined. Results are also shown in Table 1. The relationship between the melting-starting temperature and the weight ratio of mullite are shown in Fig. 3.

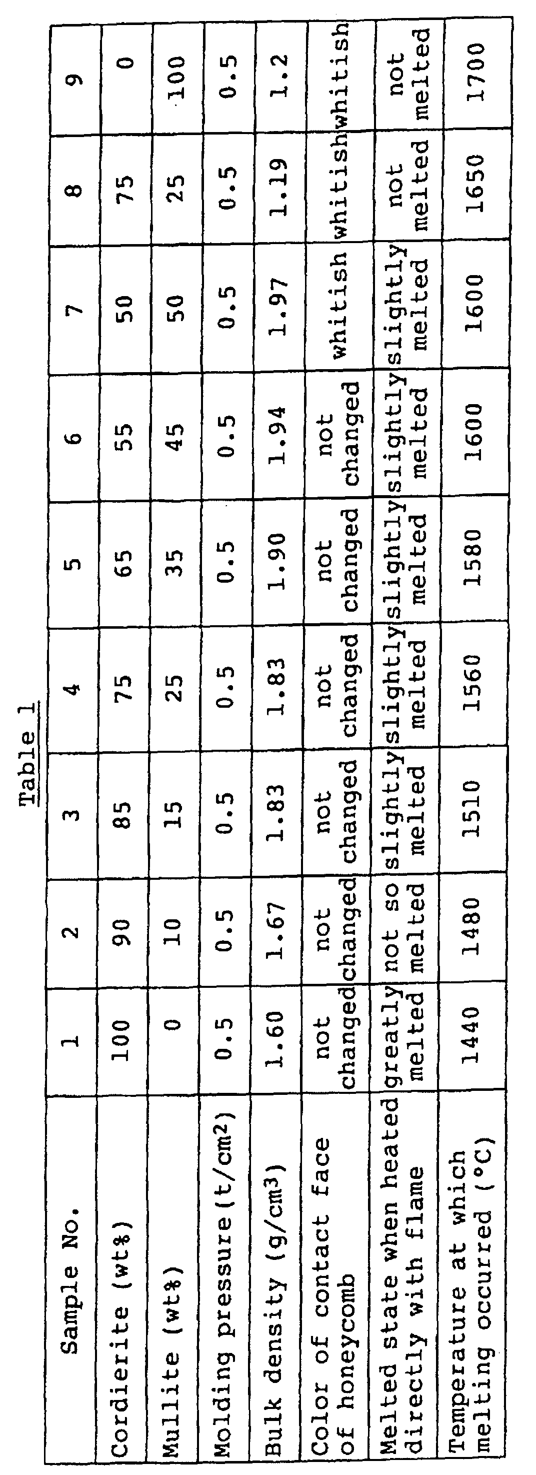

From the results in Table 1, it is seen that when the content of mullite is 15 wt%, the temperature at which the underlying board begins to be melted is not less than 1500°C which may be employed as a safety temperature in the firing kiln. Thus, heat resistance of the underlying board is enhanced. On the other hand, if the content of mullite exceeds 45 wt%, the color of the under end face of the honeycomb structural body at which the underlying board contacts unfavorably becomes whitish. Therefore, it is seen that when the content of mullite is 15-45 wt%, the underlying board exhibits sufficient heat resistance, and change in color of the fired honeycomb structural body to be fired does not occur.

As to the color change, it is presumed that an Fe component contained in the honeycomb structural body (which Fe component replaces a part of Mg) diffuses into the underlying board having a lower concentration of Fe, so that the under end face of the honeycomb structural body becomes whitish due to decrease in the Fe concentration therein. That is, the ideal composition of cordierite is Mg₂Al₄Si₅O₁₈, but a part of Mg is substituted by Fe²⁺ ions in natural origin in many cases. This Fe component in the raw material ordinarily makes the honeycomb structural body milky whitish after the firing, but the color change is caused through the decolorization due to decrease in the Fe concentration.

### Experiments 2

In order to examine the fired state of the ceramic honeycomb structural bodies fired with use of the underlying boards of the present invention, green ceramic honeycomb structural bodies were actually fired by using the firing underlying boards of the present invention or a setter disclosed in Japanese patent publication No. 1-54,636 each having the composition and various physical properties shown in Table 2, and product qualities of fired honeycomb structural bodies as well as qualities of the underlying boards were examined. In evaluating the product qualities, whether the honeycomb structural body cracked or not was examined by eyes, and a difference in dimension between upper and lower end faces of the structural body and a recessed amount in the central portion thereof were measured. In evaluating the qualities of the underlying board, whether deformation, cracking and/or color change occurred or not were examined by eyes. Results are also shown in Table 2.

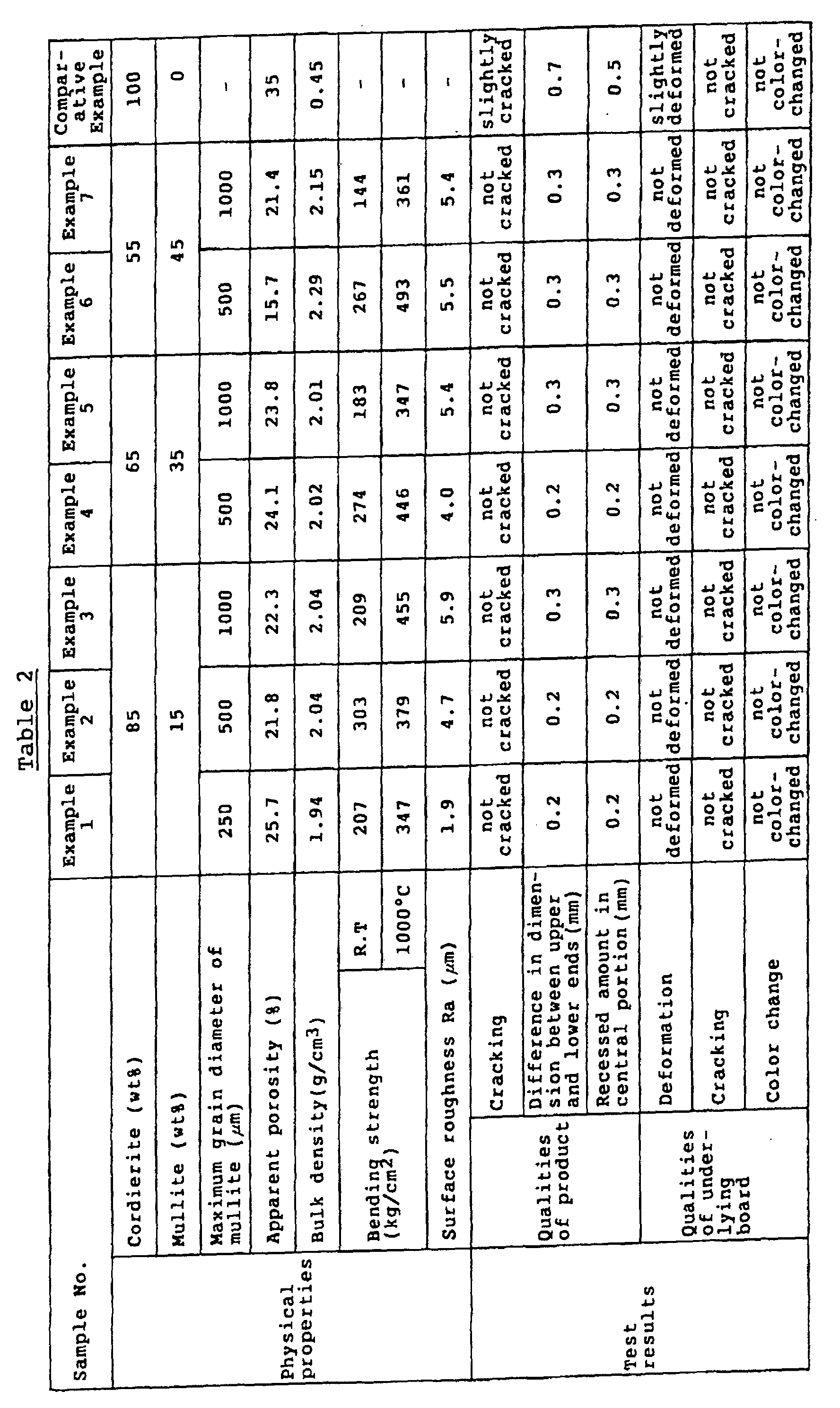

From the results in Table 2, it is seen that as compared with the underlying board as Comparative Examples, the underlying boards according to the present invention had smaller thermal deformation, and that when the green ceramic honeycomb structural bodies were fired by using the underlying boards of the present invention, the color of the under end faces of the honeycomb structural bodies did not change.

### Experiment 3

In order to examine influence of the surface roughness of the underlying boards of the present invention, green ceramic honeycomb structural bodies were actually fired by using underlying boards of the invention with their compositions and various surface roughnesses as shown in Table 3. As product qualities of the fired honeycomb structural bodies, twisting of ribs and color change in the honeycomb structural bodies were examined by eyes. Results are also shown in Table 3.

**Table 3**

| | | | | | | | |
|---|---|---|---|---|---|---|---|
| Sample No. | | 1 | 2 | 3 | 4 | 5 | 6 |
| Cordierite(wt%) | | 65 | 65 | 65 | 55 | 55 | 55 |
| Mullite(wt%) | | 35 | 35 | 35 | 45 | 45 | 45 |
| Surface roughness (µm) | | 2.6 | 10.0 | 12.3 | 5.5 | 11.0 | 15.7 |
| Qualities of product | Twisting of rib | not twisted | not twisted | twisted | not twisted | twisted | twisted |
| | Color change | not color-changed | not color-changed | not color-changed | not color-changed | not color-changed | not color-changed |

From the results in Table 3, it is seen that since the ribs are twisted at the lower end face of the honeycomb structural body due to friction resistance in shrinking at the time of firing if the surface roughness Ra exceeds 10 µm, the surface roughness Ra is preferably not more than 10 µm. The surface roughness can be adjusted by varying the grain sizes of cordierite and/or mullite.

### Experiment 4:

In order to examine influence of the content of Fe₂O₃ in the underlying boards of the present invention, actual color changes in green ceramic structural bodies were examined by eyes when the content of Fe₂O₃ was varied in various ways in underlying boards in which the crystalline phase was composed mainly of 65 wt% of cordierite and 35 wt% of mullite. Results are shown in Table 4.

**Table 4**

| | | | | | | |
|---|---|---|---|---|---|---|
| Sample No. | 1 | 2 | 3 | 4 | 5 | 6 |
| Fe₂O₃ (wt%) | 0.2 | 0.3 | 0.5 | 0.8 | 1.0 | 1.2 |
| Color change | color changed (whitish) | no color change | no color change | no color change | no color change | color changed (reddish brown) |

From the results in Table 4, it is seen that the content of Fe₂O₃ is preferably 0.3 to 1.0 wt%, because the color of the ceramic honeycomb structural bodies fired by using the underlying boards containing Fe₂O₃ in this range did not change.

### Experiment 5:

In order to examine influence of the content of TiO₂ in the underlying boards of the present invention, actual color changes in green ceramic structural bodies were examined by eyes when the content of TiO₂ was varied in various ways in underlying boards in which the crystalline phase was composed mainly of 65 wt% of cordierite and 35 wt% of mullite. Results are shown in Table 5.

**Table 5**

| | | | | | | |
|---|---|---|---|---|---|---|
| Sample No. | 1 | 2 | 3 | 4 | 5 | 6 |
| TiO₂ (wt%) | 0.1 | 0.2 | 0.4 | 0.6 | 0.8 | 1.0 |
| Color change | color changed (whitish) | no color change | no color change | no color change | no color change | color changed (reddish brown) |

From the results in Table 5, it is seen that the content of TiO₂ is preferably 0.2 to 0.8 wt%, because the color of the ceramic honeycomb structural bodies fired by using the underlying boards containing TiO₂ in this range did not change.

### Industrial Applicability:

As is clear from the above explanation, according to the present invention, since the main component of the underlying board is composed of 55-85 wt% of cordierite and 15-45 wt% of mullite, as compared with the conventional underlying boards such as setters, heat resistance is improved, deformation of the under end face, twisting of the ribs and cracking in the honeycomb structural body due to thermal deformation of the underlying boards and/or melting-out of silica can be suppressed. Furthermore, the green ceramic honeycomb structural body can be fired without causing any deformation of the under end face of the honeycomb structural body. As a result, the service life of the underlying board can be prolonged as compared with the conventional setters. In addition, the number of the steps in the production of the underlying board of the present invention can be largely reduced as compared with that in the production of the conventional setters.

## Claims

1. A firing underlying board in which a main component of a crystalline phase is composed of 55 - 85 wt.-% of cordierite and 15 - 45 wt.-% of mullite, wherein the firing underlying board contains 0.3 to 1.0 wt.-% of Fe₂O₃ and/or 0.2 to 0.8 wt.-% of TiO₂ in a chemical composition.

2. The firing underlying board set forth in claim 1, wherein a roughness Ra of that surface of the underlying board at which an object to be fired is to be placed is not more than 10 µm.

3. A method for firing a green ceramic molding by using an underlying board, firing being effected in the state that the molding is placed on said firing underlying board set forth in claims 1 or 2.

## Patentansprüche

1. Brennunterlegtafel, in welcher der Hauptbestandteil einer kristallinen Phase aus 55 - 85 Gew.-% Cordierit und 15 - 45 Gew.-% Mullit besteht, wobei die Brennunterlegtafel in der chemischen Zusammensetzung 0,3 bis 1,0 Gew.-% Fe₂O₃ und/oder 0,2 bis 0,8 Gew.-% TiO₂ enthält.

2. Brennunterlegtafel nach Anspruch 1, wobei die Rauheit Ra der Oberfläche der Unterlegtafel, auf der ein zu brennender Gegenstand angeordnet wird, nicht mehr als 10 µm ist.

3. Verfahren zum Brennen eines grünen Keramikformteils unter Verwendung einer Unterlegtafel, wobei das Brennen in einem Zustand durchgeführt wird in dem das Formteil auf der Brennunterlegtafel nach Anspruch 1 oder 2 angeordnet wird.

## Revendications

1. Support de cuisson sous-jacent dans lequel un composant principal en une phase cristalline est composé de 55 à 85% en poids de cordierite et 15 à 45% en poids de mullite, dans lequel le support de cuisson contient 0,3 à 1,0% en poids de Fe₂O₃ et/ou 0,2 à 0,8% en poids de TiO₂ en un composé chimique.

2. Le support de cuisson sous-jacent selon la revendication 1, dans lequel une rugosité Ra de la surface du support de cuisson sur lequel doit être placé un objet à cuire n'est pas supérieure à 10µm.

3. Procédé de cuisson d'un moulage en céramique crue en utilisant un support de cuisson sous-jacent, la cuisson étant réalisée lorsque le moulage est placé sur ledit support de cuisson sous-jacent selon les revendications 1 et 2.
